# EUROPEAN PATENT APPLICATION

(11) **EP 2 096 729 A1**
(43) Date of publication of application: **02.09.2009**
(21) Application number: 09250410.9
(22) Date of filing: 16.02.2009
(51) Int. Cl.: H02G 3/04, H02G 9/02

(54) **Underwater cable protectors, uses thereof and methods of underwater cable protection**

(30) Priority: 19.02.2008 GB 0803020; 22.02.2008 GB 0803220; 04.08.2008 GB 0814173; 12.01.2009 GB 0900408
(71) Applicant: Blue Ocean Technology Limited, Essex CB11 3DS (GB)
(72) Inventor: Featherstone, Jeremy John Richard, Saffron Walden Essex CB11 3DS (GB)
(74) Representative: Pickin, Susan Evis

(57) **Abstract**

Angular movement of an articulated underwater cable protector (500) of which the longitudinal axis (X) of the cable protector is coaxial with the longitudinal axis of the cable (200) is restricted to provide a robust joint which can articulate according to its surroundings underwater. The articulation joint (30, 40) of the underwater cable protector is provided between at least two modules (100) interconnected end-to-end and each module comprises a pair of mating confronting elongate half portions (1, 1'). Reliable underwater cable protection may be obtained by restricting articulation of the joint between adjacent modules to angular movement about a single transverse axis through the articulation joint, which is perpendicular to the longitudinal axis of the through passage in the joint. The longitudinal axis of the joint may be coaxial with the longitudinal axis of the through passage in the joint and hence of the cable in the joint. The longitudinal axis of the through passage in the joint may be coaxial with the longitudinal axis of the passage throughout the module and hence of the cable throughout the module.

## Description

### TECHNICAL FIELD

This invention relates to underwater cable protectors, uses thereof and methods of underwater cable protection. The term "underwater cable" throughout this specification should be taken to include any elongate structure having a transmission function underwater such as power cables, telecommunication cables, flexible pipelines carrying fluids, umbilicals, and combinations of these. "Underwater cable protectors" are devices which are employed underwater to protect underwater cable.

Underwater cable requires protection since it is susceptible to damage by external factors underwater en route from one location to another.

One known type of underwater cable protector is an articulated split metallic pipe, which is made up of a series of identical or nearly identical interconnected modules, each module having a male end having a part-spherical ball, and a co-operative matching female end having part-spherical socket at the other end (see EP1616377, DEPS394695, USP1822624 and USP6682103 for example). The articulation surfaces of the articulation joint, resulting from the male end received in the female end, are relatively angularly movable and the joint can rotate freely, known as roll, about its longitudinal axis.

In particular, in USP1822624, as well as roll, angular movement is universally allowed, due to the female end being enlarged and having an internal groove, which is larger than the male end.

Such known types of underwater cable protector can have disadvantages in circumstances where there are strong current and tidal influences and are susceptible to cable failure from fatigue or abrasion.

In particular, at the limit of articulation, the bending load in the cable protector generated by the cable tension is taken as either a point load, or a pair of opposed point loads, on the socket in the plane of articulation depending on the design of the cable protector. This is an inherent weakness, and can mean that the strength in bending of the cable protector is less than that of the cable and such a cable protector may not provide adequate strength in use.

Therefore, it is an object of the invention to provide improved underwater cable protectors.

### SUMMARY OF THE INVENTION

According to a first aspect of the invention we propose an underwater cable protector, comprising at least two adjacent modules forming a housing with a through passage for cable, each module having a male co-operative end and a female opposite co-operative end, the adjacent modules being interconnected by an articulation joint comprising the male co-operative end of one module and the female co-operative end of the adjacent module, which receives the co-operative male end of the first module, wherein the male and female co-operative ends are relatively angularly movable, characterised in that
the articulation joint comprises an axial arrangement comprising a male axle device confined in a female axle support to provide relative angular movement solely about a transverse axis through the articulation joint, wherein this transverse axis is perpendicular to the longitudinal axis of the through passage in the joint.

According to a second aspect of the invention we propose a method of articulation of an underwater cable protector having at least two adjacent modules forming a housing with a through passage for cable, each module having a male co-operative end and a female opposite co-operative end, the adjacent modules being interconnected by an articulation joint comprising the male co-operative end of one module and the female co-operative end of the adjacent module, which receives the co-operative male end of the first module,
the method comprising angularly moving the adjacent modules relatively to one another,
characterised by relatively angularly moving the modules solely about a transverse axis through the articulation joint, wherein this transverse axis is perpendicular to the longitudinal axis of the through passage in the joint.

The longitudinal axis of the joint may be coaxial with the longitudinal axis of the through passage in the joint and hence of the cable in the joint. The longitudinal axis of the through passage in the joint may be coaxial with the longitudinal axis of the passage throughout the module and hence of the cable throughout the module.

With articulation restricted to the single transverse axis through the joint, effective articulation can be obtained, which results in reduced susceptibility to movement or vibration of the articulation joint and increased strengthening of the underwater cable protector. The or each male axle device has an articulation surface which may be curved in the direction of angular movement. The ends of the male axle device may be confined in the female axle support so that the relative angular movement of the modules is about the transverse axis through the joint.

This is especially useful for cable connections onto offshore energy structures (for instance wind, wave and tidal energy devices), and particularly in shallower water, typically less than 30 metres water depth and in particular, where a cable is being protected between the seabed, through a 90 degree bend, and onto a more upright structure, as is the case for a power cable from an offshore wind turbine foundation.

Each module may be identical or approximately identical. Each module may comprise a pair of mating, confronting, and rigid module portions, providing a split protector. The module portions may be module halves or approximately module halves. The articulation surfaces of the exterior of the male end and the interior of the female end may be curved in the direction of angular movement. Also, the female axle support may have opposed spaced internal sides and the male axle device may have opposed spaced external sides, which are seated adjacent the internal sides of the female axle support, with insufficient space to otherwise angularly move. Furthermore, the transverse axis is a fixed single transverse axis through the centre of the joint. The articulation surfaces of the exterior of the male co-operative end and the interior of the female co-operative end may be generally complementarily-shaped to each other.

The male axle device may be provided by the male co-operative end and the female axle support may be provided by the female co-operative end of the adjacent module. In this case the female cavity is of such shape and size that the male end is confined in the female cavity and only able to move about the transverse axis.

The axial arrangement may comprise at least one male axle device at the side of one of the co-operative ends of the adjacent modules and at least one female axle support at the co-operative side of the other of the co-operative ends, receiving the or the respective male axle device.

This may be instead of or in addition to the male end serving as the male axle device and the female end serving as the female axle support and the male axle device and the female axle support must be co-axial with the transverse axis.

Thus, the axial arrangement may comprise a pair of male stub axle elements opposed and spaced-apart on one of the co-operative ends of the adjacent modules and a pair of opposed spaced-apart female axle support elements, each receiving a respective male stub axle element, on the other of the co-operative ends. The opposed male axle elements are therefore limited to angularly move within the female support elements about the transverse axis.

The additional device may comprise at least one device to control relative angular movement of the male and female co-operative ends of the articulation joint. Correspondingly, the method of articulation may further comprise controlling relative angular movement of the male and female co-operative ends of the articulation joint. This measure is significant since it further assists in both reducing susceptibility to vibration and in strengthening of the protector and joints.

The additional device may comprise at least one device to limit the amount of relative angular movement of the male and female co-operative ends of the articulation joint. Correspondingly, the method of articulation may further comprise limiting the amount of relative angular movement of the male and female co-operative ends of the articulation joint. The device may provide a range of angular movement of the joint about the joint axis of up to 30 degrees on each side of a neutral position and more particularly up to 10 degrees. The method may further comprise providing a range of angular movement of the joint about the joint axis of up to 30 degrees on each side of a neutral position.

The at least one device to limit the angular movement of the joint may comprise abutment devices which are radial with respect to the axis of angular movement.

The abutment devices may be provided by a stop element on one module and spaced-apart abutment surfaces on the other, the stop being relatively angularly movable between one stop surface and the other stop surface. The spaced-apart abutment surfaces may be provided by a cut-away portion of the male element. Each module may include two confronting sets of the pairs of spaced-apart abutment surfaces and respective stops co-operating therewith, one each side of the longitudinal axis of the cable protector. Each half-module may include two opposed sets of the pairs of spaced-apart abutment surfaces and respective stops co-operating therewith. One set may be above the longitudinal axis and one set below (in the neutral position).

The additional device may comprise at least one device to fix a selected angle of orientation between the male and female co-operative ends of the articulation joint, selected from a range of allowable angular movement. Correspondingly the method may comprise fixing a selected angle of orientation between the male and female co-operative ends of the articulation joint. This measure further assists in reducing susceptibility to movement or vibration for suspended cable protectors, which reduces the risk of cable failure through direct damage or cyclical abrasion at contact points. Thus, in the above cable protector and corresponding method of articulation of a cable protector, the additional control device may be at least one device, for example fixed or removable locking pins, between adjacent modules to allow a preselected angular configuration to be provided in accordance with required protection and constraint.

The applicant has therefore further appreciated that the articulation may be further restricted by fixing the male and female ends of the modules, and thereby fixing adjacent modules in a preselected angular mutual orientation in accordance with required protection and constraint. Such predetermined articulation enables a robust connection to be made between the modules, providing sufficient strength to lock out at pre-set angles between adjoining modules.

The additional device may comprise a device to apply external force to the articulation joint. Correspondingly, the method of articulation may further comprise applying external force to the articulation joint. The device to apply external force to the cable protector may be selected from springs, hydraulic cylinders, and wires to counterbalance weights, for instance such that the assembly responds to changes in cable tension caused by movement or thermal expansion (for instance, a flow-line carrying hot fluids) by changing the length of the assembly and hence maintaining the cable tension or compression within a certain, more restricted, range than if the cable protector was rigid.

The additional device may comprise a device to provide damping to the articulation joint in order to restrict rate of and rate of change of relative angular movement of the male and female co-operative ends of the articulation joint. Correspondingly, the method of articulation may further comprise providing damping to the articulation joint in order to restrict rate of and rate of change of relative angular movement of the male and female co-operative ends of the articulation joint. Damping may be provided to the articulation joint by a damping device, selected from viscous, friction and elastomeric type dampers to control the movement of the cable protector, for instance for minimising the possibility of cross-flow (vertical plane) vibrations, described below. This may be achieved by the male and female axle elements including damping material, for example the stops on the female element may be made from a damping material.

Therefore, by locking the male and female ends of the articulation joint to provide a rigid arrangement and/ or by providing a controlled level of damping to the articulation elements, increased strength and/or reduced loading may be achieved between adjoining modules.

This assists in further reducing susceptibility to movement or vibration if the cable is suspended, which could otherwise ultimately lead to cable failure through direct damage or cyclical abrasion at contact points. For instance, where the combined assembly of the cable protector and cable are suspended above the seabed for a substantial period of time and are susceptible to current flows. Here the cable protector guards against the cable vibrating under vortex induced vibrations (if more than around five metres suspension typically) which would lead to cyclical fatigue or abrasion at contact points.

The cable protector and method may respectively include a device to control/ controlling vortex shedding and reduce vibrations, such as by surface protrusions on the cable protector. Such protrusions may include strakes, shrouds, fins and fairings.

It may be noted that there may be some degree of angular movement articulation in other directions due for example to loose fit or 'play' between the male axle device or element and the female axle support due to spacing therebetween, allowing up to about 1 or 2 degrees angular movement about each of the longitudinal axis X and the axis Y orthogonal to both the longitudinal axis Y and the transverse axis Z.

The underwater cable protector may be fitted with an internal low-friction liner or coating to reduce friction between the cable and sleeve for ease of relative longitudinal and/or rotational movement between the cable and the cable protector. Such a liner reduces the pull force and/or risk of snagging and damage to the cable outer surface for cable to be pulled through the protector; also, cable is assisted in being able to roll as freely as possible within the protector. An alternative to fitting a discrete liner is to apply a low friction coating to the cable protector surfaces, such as nylon or a fluoropolymer ('Teflon').

In one embodiment the lengths of individual modules may be different to mitigate any standing wave movement or vibrations. In another embodiment the cable protector may comprise a series of identical modules interconnected by identical articulation joints.

Optionally the modules may also be fitted with internal cable clamps disposed to enable the cable to be gripped centrally in position within the cable protector;

We also propose an assembly of an underwater cable protector as above, optionally attached by a latching device, to a guide tube of a structure supported underwater.

We also propose an assembly of an underwater cable protector as above, wherein the at least one male axle device or at least one female axle support on the end module at a free end of the cable protector also act as an attachment device for a pulling-in device.

According to a third aspect of the invention we propose use of an underwater cable protector according to the invention, to protect cable housed in the through passage, wherein the protector is deployed so that adjacent modules angularly move relatively to one another, characterised by relatively angularly moving the modules solely about a transverse axis through the articulation joint, wherein this transverse axis is perpendicular to the longitudinal axis of the through passage in the joint,
whereby the cable protector articulates about the or each articulation joint and adopts a route according to its surroundings, protecting the cable housed in the through passage.

The cable protector may be suspended from a guide tube of a structure supported underwater.

The end module at a free end of the cable protector may be pulled into the guide tube by a pulling device, such as a lifting line, attached to the at least one male axle device or at least one female axle support on the end module. The end latching head may also be attached to the end module and then the line is pulled in to the guide tube as far as required to latch the latching head, and attached cable connector, on to the guide tube. The lifting line may then be slackened off or disconnected.

The cable protector may be assembled over the cable by pre-assembling a pair of mating, confronting, and rigid module portions over the cable and fastening them together, so as to form each module.

The protection afforded to cable in the protectors as described herein avoids or substantially avoid angular movement of the modules of the underwater cable protector about their longitudinal axes, known as roll (a minimal amount of which may still occur through inherent play between the male and female elements). Such cable protection is useful in reducing the risk of loop formation and of local damage to the cable, such as where the cable needs to be deployed from an installation vessel down to near the seabed and then pulled up a guide conduit, such as a vertical I-tube on a structure, since in this case a 180 degree half-loop in the cable has already been formed.

The above method of underwater cable articulation may be used in various circumstances. For example, where the seabed is stable but the cable is liable to be subjected to strong transverse currents, such that there is a tendency for the cable and sleeve to be rolled along the seabed. The above cable protection, more particularly the above cable articulation, helps to ensure that the cable remains stable on the seabed. Moreover, the above underwater cable protector may be employed over otherwise unsupported cable, such as suspended cable, which allows the cable to be both protected and constrained.

Underwater cable protectors with any of the above features may also be used to protect and constrain cables leading from a structure mounted on the seabed or a floating or moored structure. Examples of such structures include offshore wind turbines structures, wave and tidal energy devices, oil and gas production structures, structures for controlling cable and riser catenaries such as mid water arches, or oceanographic data collection structures. Typically there is a transition zone between where the cable goes from being supported and constrained on the structure and where it is supported on the seabed (or buried within the seabed) or other fixed or floating structure. This transition zone may incorporate a change in cable orientation from predominantly vertical on the structure to predominantly horizontal on the seabed. The extent of this transition zone may also change with time if the seabed is erodible. This may be due to 'erosion' (or deposition) of seabed sediments due to macro-scale sediment transport, or alternatively due to localised 'scour' due to the effect that the placement of the structure has on the local hydrodynamics of the water and sediments.

Underwater cable protectors with any of the above features may be used to protect suspended cable which should be lying on the seabed but which is no longer doing so or which is subject to risk of not doing so. Cable may be suspended or unsupported due to scour of the seabed under the cable, or uneven or rocky seabed, or a crossing with another cable or pipeline.

These underwater cable protectors and methods may be employed to protect cable from damage by external mechanical aggression, for instance dropped-object impact, or impact damage or excess tension/distortion after being hit or hooked by fishing gear or a ship's anchor. A suspended cable is much more likely to be damaged than a cable lying on, or buried in, the seabed. As well as direct damage, the situation can be self perpetuating, as once a cable has been hooked it may be dragged, increasing the cable tension and leaving more cable in suspension.

More particularly, underwater cable protectors with any of the above features may be employed:
in shallow water areas (typically from the shore to 100m water depth, and especially the shallower end of this range where the impact of waves at the level of the seabed is greatest), where the currents may be high, where the wave action may be strong, and also where the seabed sediments may be mobile. The cable protectors may assist in protecting offshore cables which transfer electrical power to be exported back to shore, and
in deeper water, typically 2000m, for instance in the oceanographic and hydrocarbon and mineral extraction industries, where the protection and constraint requirements may be primarily to minimise vibration in the cable whilst maintaining minimum bend radius, rather than to maintain stability against currents and waves.

The underwater cable protectors may be pre-installed on the cable prior to deployment. During this procedure the articulation joints may be allowed to move in order that the sleeve and cable assembly may be wound on a reel; during deployment, the articulation joints may be locked to provide predetermined sleeve routes.

Thus, the above described articulation may be employed to provide effective underwater cable protection. The controlled articulation is useful as it can be regulated. Furthermore, control against vibration and other external factors are also beneficial. Cable protectors as above are likely to exhibit increased strength, particularly as regards bending.

### BRIEF DESCRIPTION OF THE DRAWINGS:

Embodiments of underwater cable protectors and methods of articulation thereof and of cable protection according to the invention will now be described by way of example, referring to the drawings (not all to scale or to the same scale), in which:
Figure 1 is a perspective diagrammatic view from one end of an underwater cable protector according to the invention, consisting of three interconnected identical modules, each module consisting of a pair of almost identical half module portions, and a cable received in the passage therethrough, two modules already assembled over the cable and the third ready for assembly;
Figure 2 is an exploded view of one of the modules of the underwater cable protector of Figure 1, illustrating the pair of almost identical half module portions for receiving a cable therebetween (corresponding features in the far half-module are denoted with an apostrophe where applicable);
Figure 3 is a perspective side view of one of the assembled modules of Figures 1 and 2 (corresponding features in the far half-module are again denoted with an apostrophe where applicable);
Figure 4a shows a sectional plan view through a plane perpendicular to the line A-A of Figure 3, when looking in the direction of the arrows, of two adjacent modules as shown in Figures 1 to 3, assembled around a portion of cable, with the co-operating ends of the respective adjacent modules interconnected for articulation around axis Z;
Figure 4b shows a plan view of the underwater cable protector of Figure 4a;
Figure 5 is a view similar to Figure 2 of a variant of an underwater cable protector module according to the invention;
Figure 6 shows a detailed sectional view through plane B-B of Figure 4b, when looking in the direction of the arrows, giving a section view through the articulation joint of a module in a locked out end position;
Figure 7 is a similar view to Figure 6, showing the use of a stop adjuster to limit angular movement between two interconnected modules according to the invention;
Figure 8 shows an incremental stop arrangement to provide a pre-set range of angular stop locations, showing one half module and the confronting half module of the respective adjacent module;
Figure 9 shows a stop arrangement for one female half cavity of a half module and its respective confronting half module, to provide a continuous range of angular stop locations;
Figure 10 is a similar view to Figure 6, showing a damping device arranged between two interconnected modules to mitigate cross-flow vibration;
Figure 11a is a view from the female end and to one side of a half module, showing a variant of Figure 9 and in which a pair of damping blocks is employed;
Figure 11b shows a section through C-C of the damping block shown in Figure 11b;
Figure 12 shows an underwater cable protector according to the invention comprising a completely assembled bend limiter cable protector connected between a vertical hang off point and seabed;
Figure 13 shows an underwater cable protector according to the invention comprising a completely assembled bend limiter cable protector disposed between an angled J tube exit point from a structure, supported by the seabed, and the seabed;
Figure 14 shows an underwater cable protector according to the invention, similar to the assembly of Figure 13, with the sleeve disposed between a floating structure rather than a fixed structure;
Figure 15 shows a plan view of an underwater cable protector according to the invention employed as a cable bend limiter, showing how movement is prevented in the transverse direction T;
Figure 16 shows a similar view to Figure 15 for comparison, illustrating how a conventional bend limiting device is unable to resist a transverse current and moves with the current;
Figure 17 shows an underwater cable protector according to the invention used as a bend stiffener in deploying a cable from a latching device at the bottom outlet of a support structure;
Figure 18 shows an underwater cable protector according to the invention employed as a J-tube assembly between a support structure and the seabed;
Figure 19 shows an underwater cable protector according to the invention employed as a cable protector assembly to route a suspended cable from an underwater structure around which scour has occurred;
Figure 20 shows a J-tube comprising an underwater cable protector according to the invention to form a slack accumulator;
Figure 21 shows a J-tube comprising an underwater cable protector according to the invention, further including a constant tension slack accumulator using a counterweight;
Figure 22 is a diagrammatic sectional view through a conventional suspended cable illustrating potential flows and modes of vibration of cable underwater;
Figure 23 is a diagrammatic sectional view through a suspended underwater cable having a cable protector according to the invention to limit vibration, illustrating flows and modes of vibration of the cable;
Figure 24 shows an underwater cable protector module according to the invention, further including external helical strakes;
Figure 25 shows an exploded underwater cable protector module according to the invention, further including an inner liner to enable cable to be pulled through with reduced friction;
Figures 26 to 28 show a second embodiment of an underwater cable protector according to the invention, in which Figure 26 is an exploded view of a module of the cable protector illustrating a pair of almost identical half module portions for receiving a cable therebetween; Figure 27 shows the module Figure 26 assembled; and Figure 28 is a sectional view through the articulation joint of adjacent modules of Figure 27 in a locked out end position;
Figure 29 is a diagrammatic view showing a latching device to be fitted over a cable protector according to the invention; and
Figure 30 is a sectional view showing an assembly of the latching device of Figure 29 and cable protector shown in Figure 27 latched within the lower end of an I-tube of a structure supported underwater;
Figure 31 is a flow chart illustrating a method of articulation of either of the two embodiments of underwater cable protector; and

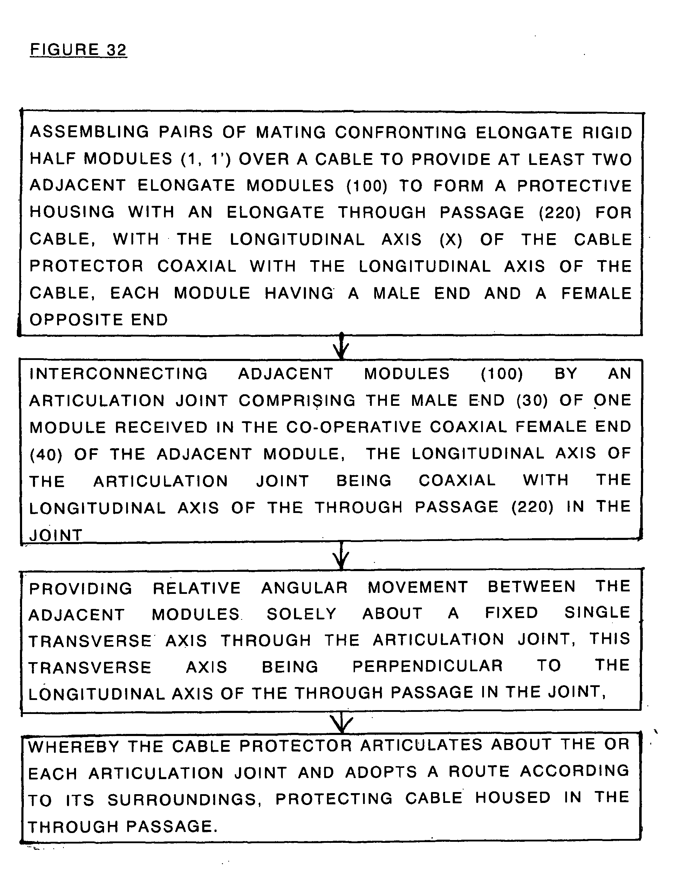

Figure 32 is a second flow chart illustrating use of either of the two embodiments of underwater cable protector.

### DESCRIPTION OF PREFERRED EMBODIMENTS

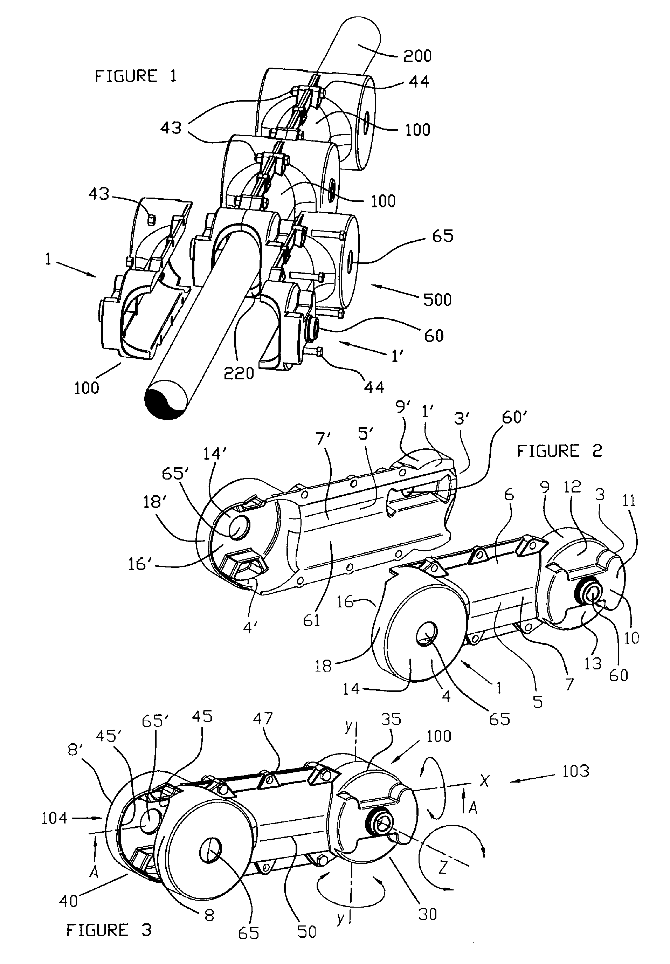

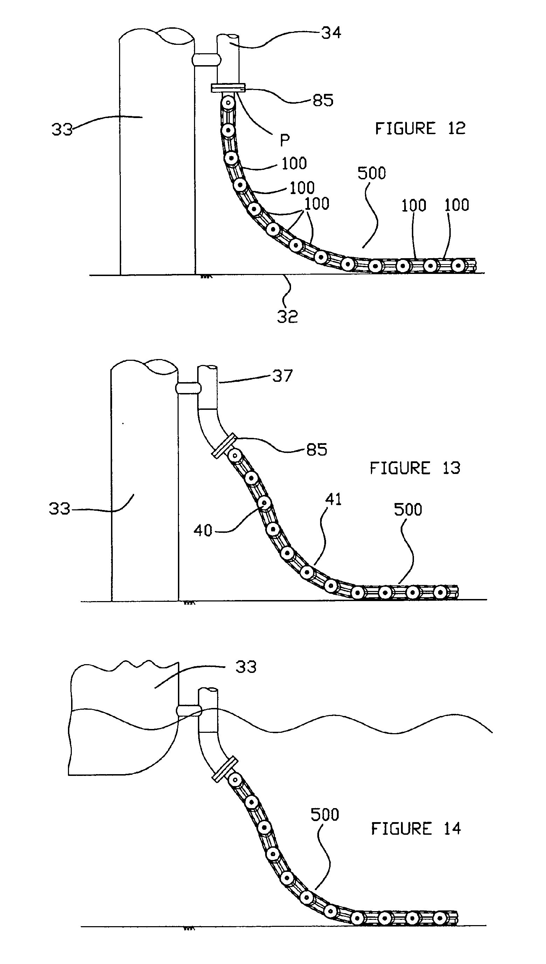

A first embodiment of an underwater cable protector (500) for an elongate underwater cable (200) consists of a series of interlinked, identical modules (100), illustrated for example in Figure 12. As shown in Figure 1, the cable to be protected is disposed centrally within adjoining modules (100) with the longitudinal axis X (indicated in Figure 3) of the cable coincident with the longitudinal axis Y of the protector.

Each module has an external part-cylindrical male co-operative end (30) at one end and an internal co-operative part-cylindrical female cavity (40) at the other end to receive the respective male joining end of an adjacent module, thereby interconnecting the adjacent modules. The part-cylindrical external male co-operative end (30) has an outer curved articulation surface (35) and the internal co-operative part-cylindrical female cavity (40) has co-axial inner curved articulation surfaces (45).

Figure 3 shows one cable protector module (100), for use with at least one identical module (100), each module consisting of a pair of mating confronting interlocked elongate rigid half-modules (1, 1'), which provide an internal elongate through-passageway (220) to house the elongate cable (200). Each module has a male co-operative end (30) and an opposite female end (40) for receiving the male end (30) of an adjacent module. The male co-operative end (30) and the female co-operative end (30) form an articulation joint.

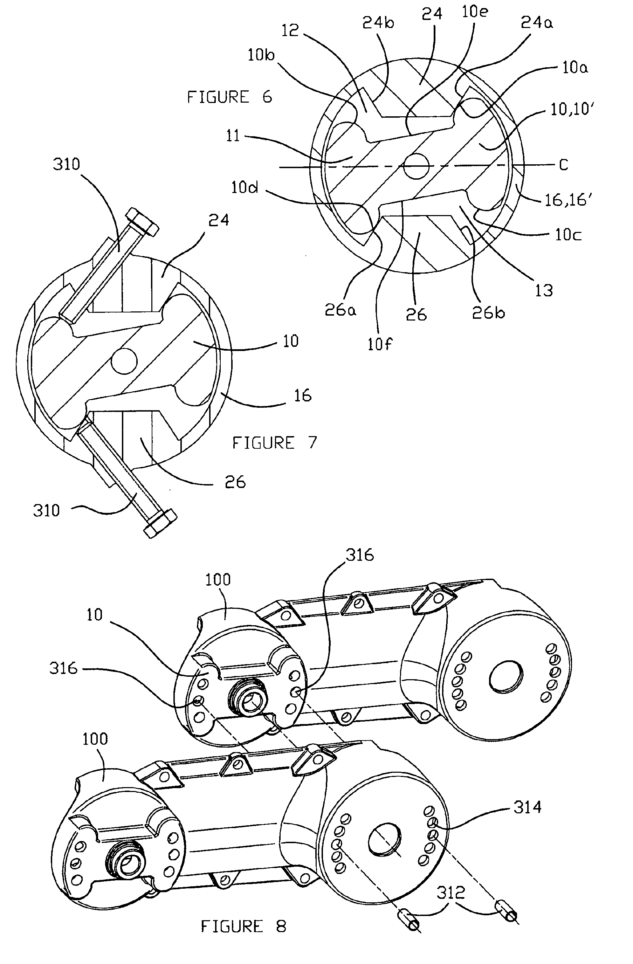

For convenience, simplicity and consistency, the module will be described throughout the specific description while referring to the orientation of the module as illustrated, with the male first end (103) and the female second other end (104) and the notional horizontal neutral centre disposition as illustrated by line C in Figure 6.

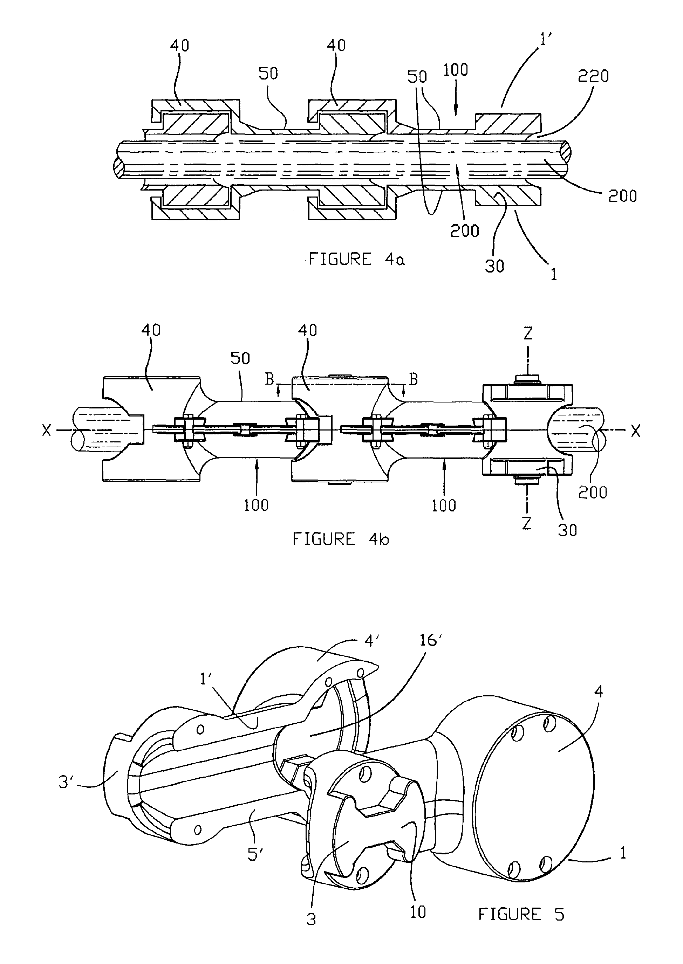

Each module (100) is angularly movable about a single fixed transverse axis (Z), as indicated in Figure 3 existing centrally across and also through the male end and in Figure 4b, through the joint between the male and female ends. In particular, the part-cylindrical external male end of each module is disposed with its transverse axis of angular movement (Z) perpendicular to the longitudinal axis (X) of the cable protector.

The half-modules (1, 1') are substantially identical and each half-module has a male end half-portion (3, 3') and a female recessed end half-portion (4, 4') joined by an elongate hollow sleeve half-portion (5, 5'), with internally curved sides (6, 6') and an optional flat region (7, 7') between the ends.

The pair of confronting half-modules (1, 1') of each module fit together so that:
the two mating half sleeve portions (5, 5') form an intermediate hollow sleeve portion (50) for surrounding the cable,
the two male end half-elements (3, 3') form the cylindrical external male end (30) as a result of the mating confronting articulation cylindrical portions (9, 9'), which together form the outer curved articulation surface of the male end (30), and integral male limiter half elements (10, 10') at the male end (103) of the module,
and the two mating internal female half-cavities (16, 16') with co-axial articulation portions (8, 8'), which together form the inner curved articulation surface (45), form the female cavity (40) at the female end (104) of the module, in which the male end (30) is housed.

Each half module can be connected to the other by any suitable co-operating nuts (43) and bolts (44), as seen in Figure 1, or alternatively by rivets, or by a hinge between the half modules, or by using a hook and stub end arrangement, or similar.

Furthermore the female element (40) formed by the two adjoining female half cavities (16, 16') accommodates the whole male end (30), consisting of a substantially cylindrical portion formed by the adjoining part-cylindrical half portions (9, 9') integral with the male limiter elements (10, 10') The confinement of the male end in the female cavity provides relative angular movement solely about a transverse axis (Z) through the articulation joint, wherein this transverse axis is perpendicular to the longitudinal axis (X) of the through passage (220) in the joint.

Referring to Figure 2, confronting male end half-portions (3, 3') have an externally part-cylindrical articulation surface (9, 9') and form the male end (30). Each female end half-portion (4, 4') has an internally-shaped wall (14, 14'), defining an internal female half-cavity (16, 16') and having a lip (18, 18') to assist in retaining a respective male limiter half-element (10, 10') and male end co-axially in the cavity.

Thus, the female second end (104) of the module has an internal female cavity (40) intended to receive the part-cylindrical male end (30) of the next module, as shown in Figure 4. Of course the module could be reversed in use and moreover, employed at any angle itself, while the axis of angular movement is always about the single fixed transverse axis (Z) of the module through the joined male and female ends (30, 40). This transverse axis (Z) is also centrally through the cylindrical end. The axial arrangement results from the male end and female cavity being of such shape and size that the male end is confined in the female cavity and only able to move about the transverse axis (Z). Thus, the male end (30) has an outer articulation surface (35) which is curved in the direction of angular movement and hence able to turn in a complementarily-curved portion of the internal cavity (45) of the female end, while the opposed spaced partially-flat sides (10) of the male end, providing the ends of the axle, are confined in the female cavity (40) since they are seated adjacent the partially-flat internal side wall (14, 14') of the female cavity (40), with insufficient space to otherwise angularly move.

The relative angular movement may also be assisted by an additional axial arrangement provided by a pair of spaced, opposed male stub axle elements (60, 60'), one on each side of the exterior of the module at the male end (30), and each axle element is supported in a respective female axle support aperture (65, 65') on each side of the module at the female end (40). The transverse axis (Z) is co-axial with the transverse axis through the male elements and the female axle supports. The axial arrangement results from the male stub axles (60, 60') and the respective female axle support cavities (65, 65') being of such shape and size that they are confined in the female supports (65, 65') to only be able to relatively angularly move about the transverse axis (Z) and thereby so is the male end (30) relative to the female end (40). Thus, the male axles each have an outer articulation surface (95) which is curved in the direction of angular movement and hence able to turn in the complementarily-curved female cavities (65, 65'), with insufficient space to otherwise angularly move.

It will be noted that the female co-operative end (40) of the module is generally complementarily shaped to the male co-operative end (30) and this assists with providing stable articulation.

Each male co-operative end also has an outwardly-facing shaped limiter half-element (10, 10'), which has a pair of opposed, upper and lower (as seen in the figure) cut-away recess portions (12, 13), employed in further limiting relative angular movement of the half-module when joined to an adjacent module and thereby limiting respective relative angular movement of the adjacent modules. Now referring to Figure 6, protruding into the internal female half-cavity (16, 16') from above and below is a pair of opposed, upper and lower, internal stops (24, 26), complementarily shaped to the upper and lower recesses (12, 13), whereby the respective stop (24, 26) limits relative angular movement of the adjoining modules to limit the articulation around the axis of angular movement of the articulation joint. This will now be described in more detail.

A known range of allowable angular movement of each half-module is determined by the external shape, in particular the radial surfaces, and angular position of the half limiter elements (10, 10'). The embodiment of Figure 2 will be described mainly with reference to the near first half module (1). The half limiter element (10, 10') has a flat external face (11, 11'), which is angularly movable within the adjoining female half cavity (16, 16'), which has a complementarily flat internal wall surface. The upper and lower cut-away portions (12, 13) have a horizontal surface (10e, 10f) between spaced-apart abutment surfaces (10a and 10b, and 10c and 10d) and the stops providing respectively spaced-apart upper abutting leading radial surfaces (24a, 10a) and lower abutting trailing radial surfaces (26a, 10d).

As shown in Figure 6, the male limiter element (10, 10') of each half module is able to angularly move between the opposed stops (24, 26) of the respective confronting female half cavity (16, 16'). The second far other half-module (1'), with male half joining element (10'), corresponds.

The transverse axis (Z) through the articulation joint is firstly perpendicular to the longitudinal axis of the cable protector and secondly perpendicular to the plane between the half modules in this embodiment. Upper abutting leading surfaces (24a, 10a) and lower abutting trailing surface (26a, 10d) co-operate to provide a rearward stop and likewise, upper abutting trailing surfaces (24b, 10b) and lower abutting leading surfaces (26b, 10c) co-operate to provide a forward stop. The typical angular movement allowed would be plus 10 degrees clockwise and anti-clockwise from the neutral centre straight line position C.

As a result of the axial arrangement provided by the coaxial part-cylindrical portions (8,8',9,9'), articulation about the transverse axis (Z) of the part-cylindrical portions (8,8',9,9'), adjacent modules consequently are restricted to move angularly about the Z axis and consequently the cable (200) in the passageway (220) of the protector (500) is only bent about the transverse axis (Z) in the plane (X, Y).

Thus, a range of potential angles of orientation between adjoining modules is available by adjusting the angle between the male limiter half elements (10, 10') and their respective female half elements (16, 16'). Furthermore, an angle within the range can be preselected, adjusted and set by various means as shown in the embodiments given in Figures 7 to 9. Additional damping may also be employed to restrict the rate of relative angular movement of adjacent modules.

Figure 7 again shows an end view through the articulation joint of a module fitted with an adjuster for example, bolts (310) to lock out the angle of articulation of the male half limiter element (10, 10') with respect to the co-operating female half element (16, 16'). As shown the adjuster is locking the angle of articulation at one of the two extreme positions on either side of the neutral centre position C, but the adjuster may also be positioned at any selected intermediate position to lock to any given angle within the overall range available, or provide further limitation to the range.

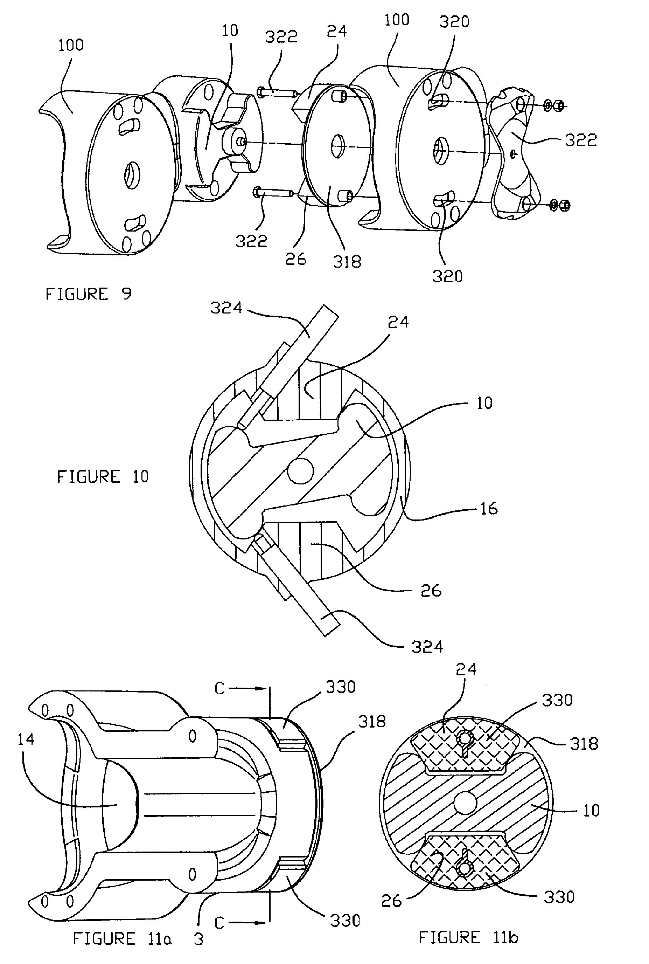

An arrangement may be employed to further limit the range of relative angular movement, for example as shown in Figures 8 and 9. Figure 8 shows the use of stop pegs (312), fitted through spaced apertures (314) in the outside of the female half cavity and through correspondingly spaced apertures (316) in the respective confronting male limiter half element (10, 10') of the respective adjacent module during assembly, such that they may be inserted by divers during service. Alternatively bolts may be used in place of stop pegs, fastening into tapped threads cut into the apertures (316).

In another arrangement of Figure 9 the female end of the half module includes an internal guide disc (318) is seated between the male limiter element (10, 10') and the external wall of the female cavity in which a pair of curved slots (320) is provided: bolts (322) extend from the male limiter half element (10, 10') through the internal guide disc (318), through the guide slot (320) to an outer guide (322) to which they are bolted to define a required angle of mutual orientation between the male and female elements. The upper and lower stops (24, 26) are fixed to the guide disc (318) of the female cavity. The guide disc is mounted coaxially with transverse axis z and attached to the corresponding internal female cavity wall (14, 14').

Figure 10 shows damping devices (324) fitted to restrict the speed and acceleration of angular motion of the male half limiter element (10, 10') within the confronting female half cavity (16, 16') to minimise motion and vibration. Such devices could be viscous (as shown) or elastomeric or any other suitable damping device.

In another embodiment, shown in Figures 11a and 11b, an intervening guide disc (318) is again employed and the upper and lower stops (24, 26) are made from rubber damping blocks (330), disposed in the recesses on respective male limiter half element (10, 10') as before. The guide disc is again mounted coaxially with transverse axis Z and attached to the corresponding internal female cavity wall (14, 14') to provide elastomeric damping of the articulation joint.

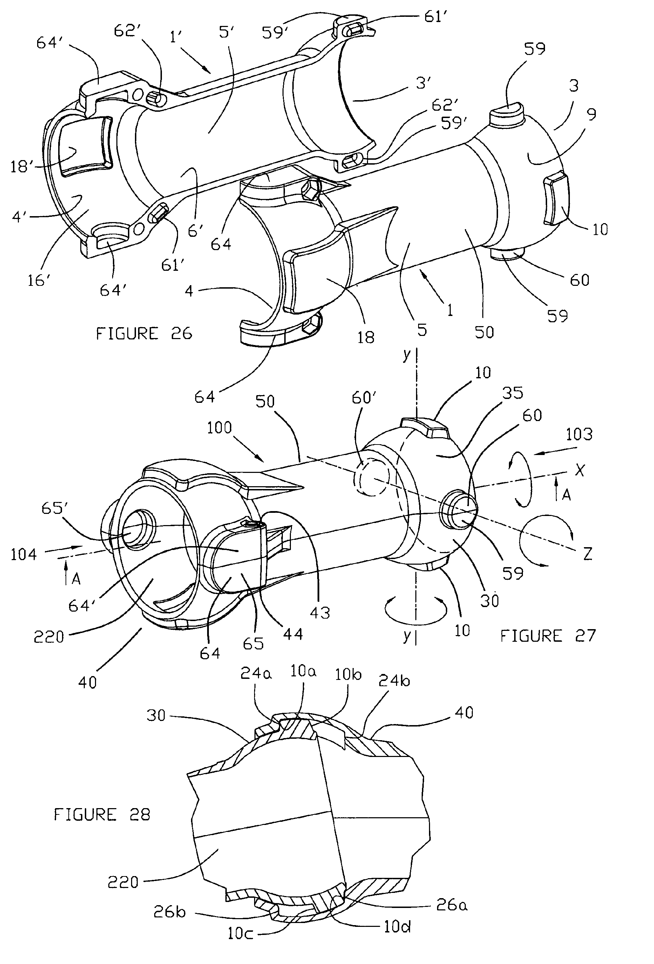

Figures 26 to 28 show another embodiment of underwater cable protector, and correspond to Figures 2 and 3. In this embodiment the plane between the two half modules is intersected by the transverse axis through the articulation joint. The same reference numerals will be used for corresponding features in the second embodiment.

Each module again has an external part-spherical male end (30) at one end and an internal co-operative part-spherical female cavity (40) at the opposite other end to receive the respective male joining end of an adjacent module, thereby interconnecting the adjacent modules. The part-spherical external male end (30) has an outer curved surface (35) and the internal co-operative part-spherical female cavity (40) with inner curved surfaces (45).

The cable protector module (100) is again for use with at least one identical module, each module consisting of a pair of mating confronting interlocked elongate rigid half-modules (1, 1'), which provide an internal elongate through-passageway (220) to house the elongate cable (200).

Each module (100) is again angularly movable about a fixed single transverse axis (Z) through the joint, as indicated in Figure 27 existing centrally across and also through the male end and in Figure 27, through the joint between the male and female ends. In particular, the part-spherical external male end of each module is disposed with its transverse axis of relative angular movement (Z) perpendicular to the longitudinal axis (X) of the cable protector.

The half-modules (1, 1') are substantially identical and each half-module has a male end half-portion (3, 3') and a female recessed end half-portion (4, 4') joined by an elongate hollow sleeve half-portion (5, 5'), with internally curved sides (6, 6').

The pair of confronting half-modules (1, 1') of each module fit together so that:
the two mating half sleeve portions (5, 5') form an intermediate hollow sleeve portion (50) for surrounding the cable,
the two male end half-portions (3, 3') form the part-spherical external male end (30) and the two mating internal female half-cavities (16, 16') form the internal part-spherical female cavity (40) at the female end (104) of the module, in which the male end (30) is housed. Each half module can be connected to the other by any suitable co-operating devices, such as co-operating nuts (43) and bolts (46) and mating locating pins (61, 61') and recesses (62, 62'), which are able to carry shear loads. Furthermore the female element (40) formed by the two adjoining female half cavities (16, 16') accommodates the whole male end (30).

Thus, the female second end (104) of the module has an internal female cavity (40) intended to receive the part-spherical male end (30) of the next module. Again, of course the orientation of the module could be reversed in use and moreover, employed at any angle itself, while the axis of angular movement is always through the transverse axis (Z) of the module through the joined male and female ends (30). This transverse axis (Z) is also centrally through and across the part-spherical end. The male end will move relatively angularly in the female cavity (40) of the adjacent module about the transverse axis (Z).

In this embodiment the relative angular movement of the male and female ends (30, 40) of adjacent modules about the single transverse axis (Z) through the articulation joint solely results from an axial arrangement provided by a male stub axle element (60, 60'), on each side of the exterior of the module at the male end (30), which is located in a respective female axle support aperture (65, 65') on each side of the module at the female end (40). This axial arrangement, having the male axles confined to relatively angularly move in the female axle supports ensures that the adjacent modules must move solely relatively angularly about the transverse axis (Z). The transverse axis (Z) is co-axial with the transverse axis through the male elements and the female axle supports.

The axial arrangement results from the male stub axles (60, 60') and the respective female axle support cavities (65, 65') being of such shape and size that they are in the female support cavities (65, 65') to only be able to relatively angularly move about the transverse axis (Z) and thereby so is the male end (30) relative to the female end (40). Thus, the male axles (60, 60') each have an outer articulation surface which is curved in the direction of angular movement and hence able to turn in the complementarily-curved female cavities (65, 65'), while the opposed spaced flat sides (91, 91') of the male axles are confined by being seated adjacent the flat internal sides (66) of the female cavities (65, 65'), with insufficient space to otherwise angularly move.

It will be noted that the female end (40) of the module is generally complementarily shaped to the male end (30) and this assists in stable articulation.

The two opposed round female support cavities (65, 65') in the female end of the module are formed by a half cavity (64, 64') from each half module and these female cavities (65, 65') are generally complementary to the respective male axle element (60, 60') received therein, also formed by an axle half element (59, 59') from each half module in the male end. Each female half module also includes mid-way between the half female cavities a recess (18, 18') to receive a corresponding stop (10, 10') on the male end of the adjacent half module, so that the female end has a pair of opposed recesses (18, 18'), each for receiving a respective opposed stop (10, 10') on the exterior of the male end. This limits the amount of possible angular movement of the articulation joint.

Figure 28 corresponds to Figure 6 for this alternative embodiment, showing how the sleeve can lock out at a predetermined angle either side of the neutral position. As shown in Figure 28, the stops (10) of each male end are able to angularly move between the opposed spaced stop surfaces (24, 26) of the respective co-operative recess (18). Upper abutting leading surfaces (24b, 10b) and lower abutting trailing surface (26b, 10c) co-operate to provide a clockwise (in the sense of Figure 28) first stop and likewise, upper abutting trailing surfaces (24a, 10a) and lower abutting leading surfaces (26a, 10d) co-operate to provide an anti-clockwise (in the sense of Figure 28) second stop. The typical angular movement allowed would be of the order of 10 degrees clockwise and anti-clockwise from the neutral centre straight line position.

As a result of the articulation about the transverse axis (Z) of the round male elements (60) in the respective female cavities (65), adjacent modules consequently are restricted to move angularly solely about the fixed single transverse axis Z and consequently the cable (200) in the passageway (220) of the protector (500) is only bent about the transverse axis (Z) in the plane (X, Y).
An angle between modules can be preselected and fixed by various means, for example as shown in the examples given in Figures 7 to 9. Additional damping may also be employed, for example as also previously described.

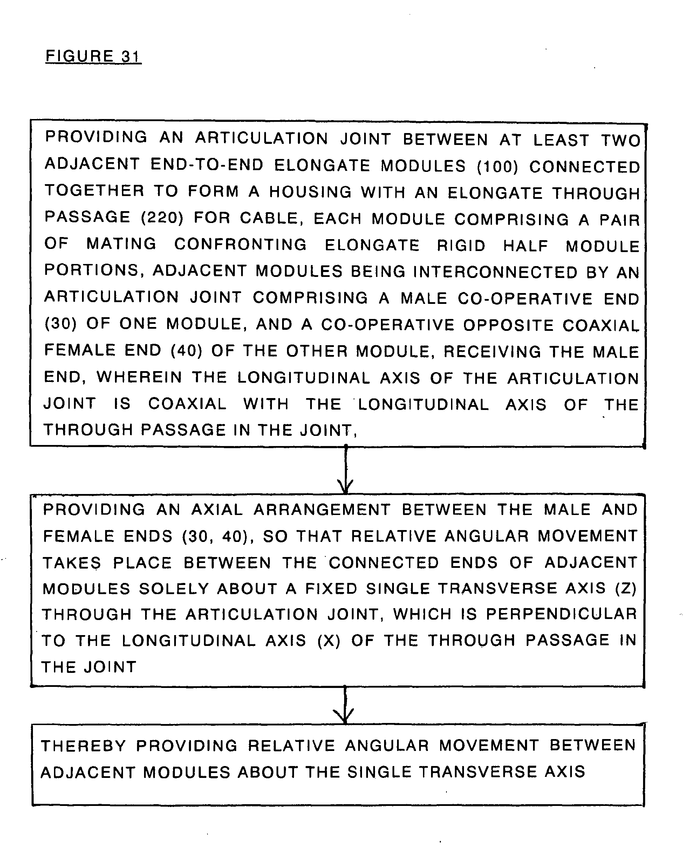

An example of a method of articulation of the two embodiments of underwater cable protector is now described, with reference to the flow chart in Figure 31, the steps of which are:
providing an articulation joint between at least two adjacent end-to-end elongate modules (100) connected together to form a housing with an elongate through passage (220) for cable, each module comprising a pair of mating confronting elongate rigid half module portions, adjacent modules being interconnected by an articulation joint comprising a male end (30) of one module, and a co-operative coaxial female end (40) of the other module, receiving the male end, wherein the longitudinal axis of the articulation joint is coaxial with the longitudinal axis of the through passage in the joint, and
providing an axial arrangement between the male and female ends (30, 40), so that relative angular movement takes place between the connected ends of adjacent modules solely about a fixed single transverse axis (Z) through the articulation joint, which is perpendicular to the longitudinal axis (X) of the through passage in the joint,
   thereby providing relative angular movement between adjacent modules about the single transverse axis.

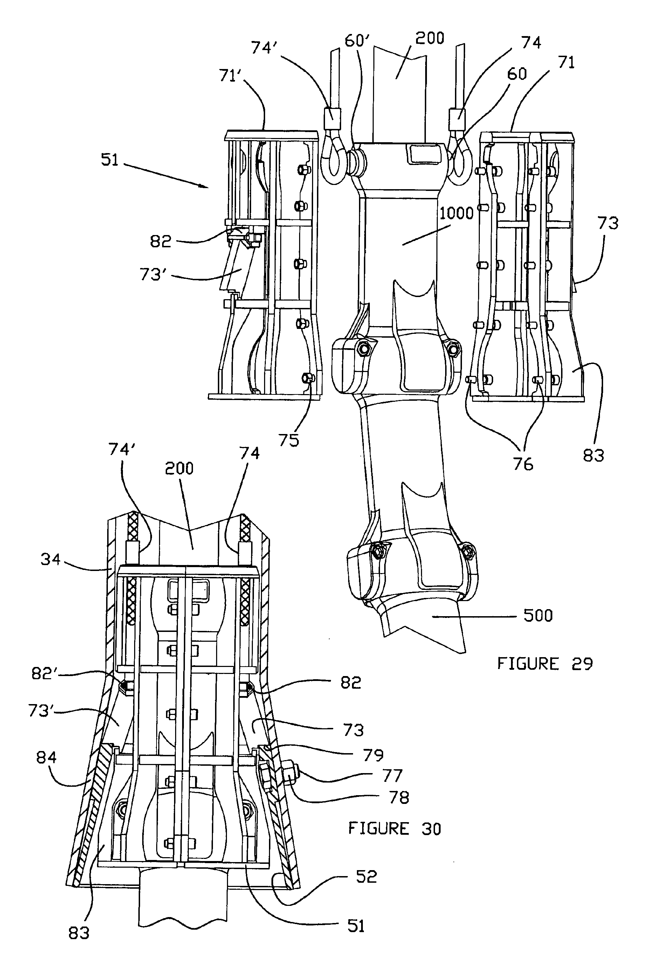

Figure 29 shows a split latching head (51) ready to be attached to the topmost module (1000) of a cable protector (500) for assembly into a guide I-tube (34) of a structure supported underwater, such as shown in Figure 30, and then pulled in to the guide tube. At the ends (74, 74') of a pulling line, which may be rope or wire, a pair of eyelets is located over the male axle co-operative ends (60) on each side of the cable protector of the topmost module (1000).

The latching head consists of two opposing frames (71, 71') which clamp around the topmost module and are retained by a series of fasteners such as nuts (75) and bolts (76). These are put in place manually. The latching assembly consists of a pair of spring-biased latching dogs (73, 73'). The latching dogs may be sprung by a standard rubber torsional bar (82) as shown in Figures 29 and 30 where an arrangement of rubber cords (not shown) around the pivot provides the spring force, or alternatively metal compression springs (not shown) may be used. The latches are located directly below the respective pull-in lines.

The opposing frames 71,71' are typically made from carbon steel, whereas the lifting lines may be made from steel wires or a non-metallic material, such as a high modulus polyethylene with protective cover of composite yarn (for instance 'Dyneema') or other fibrous rope, Kevlar or similar.

The line ends (74, 74') may be the two ends of one line which is passed over a sheave block, which in turn is pulled by the same lifting line in the guide tube 34 as is attached to the topmost end of the cable. This arrangement ensures that the tension in each rope end is the same, which is advantageous for effective engagement of the latching head into the guide tube (34) and effective latching. It also ensures that the weight of the cable protector assembly is not taken by the cable, and allows the cable to be moved if appropriate relative to the cable protector sleeve, which may be advantageous for installation and maintenance operations.

Optionally the cable protector may be linked to the cable (200), for instance the line ends (74, 74') may be the two pulling eyes of a single conventional double eye or split lace up cable grip (not shown) fitted further up to the cable (200) and consequently ensuring that the cable protector assembly is pulled up with the cable. In this case the weight of the cable protector assembly is taken by the cable during the pull in operation. Such cable grips are also known as 'cable stockings' or 'Kellum grips'.

Optionally the line ends (74, 74') may be two independent pulling ropes connected to a messenger wire (not shown) within the guide tube (34).

Figure 30 shows the latching head (51) pulled up inside the guide tube (34) with the latching dogs (73, 73') engaged against the upper edge (79) of a conical latching ring (52). The latching ring (52) may be held in place within the guide tube (34) by a plurality of recessed bolts (77) and co-operating nuts (78). Once in this position, such that the cable protector is retained and the weight of the cable protector is taken through the latching dogs and the conical latching ring into the guide tube, the lifting line(s) can be released and removed and/or the cable may be pulled through the sleeve.

Optionally the latching dogs and latching ring may be omitted and the cable protector retained in position by maintaining tension on the lift lines (74, 74'), and the lift line(s) connected onto the structure, normally above sea level for ease of working and access. In this case it may be advantageous to use a latching head (51) with parallel sides and omit the lower flaring (83) which matches the guide tube bell mouth (84) for use with the latches (73, 73') and latching ring (52), and prevents over-pull with the latches. The advantage of such an arrangement is to enable the latching head and cable protector assembly (500) to be pulled up within the guide tube as far as is required.

It is sometimes required to seal the cable entry at the lower end of the guide tube as a protection against corrosion, and such sealing arrangements can be incorporated in the latching head as required.

Pairs of adjacent modules (100) as described may be assembled to provide a cable protector (500) of any required length. The modules (100) can be assembled over cable into a series of articulated interconnected modules in a method summarised as follows:
assembling pairs of mating longitudinal half modules (1, 1') over the cable, defining a through passage for cable with the longitudinal axis of the cable protector coaxial with the longitudinal axis of the cable,
interconnecting the or each module (100) by an articulation joint (30, 40) comprising coaxial cylindrical articulation portions (8, 8', 9, 9') provided by each two adjoining modules, so that the articulation portions are relatively angularly movable about the longitudinal axis (Z) through the coaxial part-cylindrical module ends, wherein the axis (Z) is firstly perpendicular to the longitudinal axis (X) of the cable protector and secondly perpendicular to the plane (X, Y) between the half modules,
so that the assembled cable protector can articulate about the or each joint (30, 40) and is capable of adopting a route according to its surroundings.

An articulated underwater cable protector (500) as described above for either embodiment may be effectively employed for suspended underwater cable because it can adapt to its surroundings. It can also be oriented into predetermined shapes, as will now be described in a series of embodiments with reference to Figures 12 to 21.
Figure 12 shows a vertical structure (33) mounted on the seabed (32), with an I-tube (34) for routing the cable up the structure, linked to the cable protector assembly via a swivel (85). The sleeve is employed to protect and constrain the cable inside as it moves between the vertical hang off point P at the swivel and continues around an approximately 90 degree arc onto the seabed (32). If the seabed scours, and if there is available slack in the cable then the assembly can drop in the vertical plane to readjust the cable position, increasing support from the seabed, whilst maintaining cable protection and preventing the cable from taking up a position which violates the minimum bend radius requirement. This feature is not necessarily limited to a single bend, as shown in Figure 13, where the cable is constrained from the J-tube (37), optionally via a swivel (85) to the seabed in a bend (40) followed by reverse bend (41) configuration, all the time maintaining the cable minimum bend radius.

Figure 14 is a similar assembly to that seen in Figure 13, except that it is mounted from a moving structure (33) (which may be floating, moored, or guided) rather than from a fixed structure.

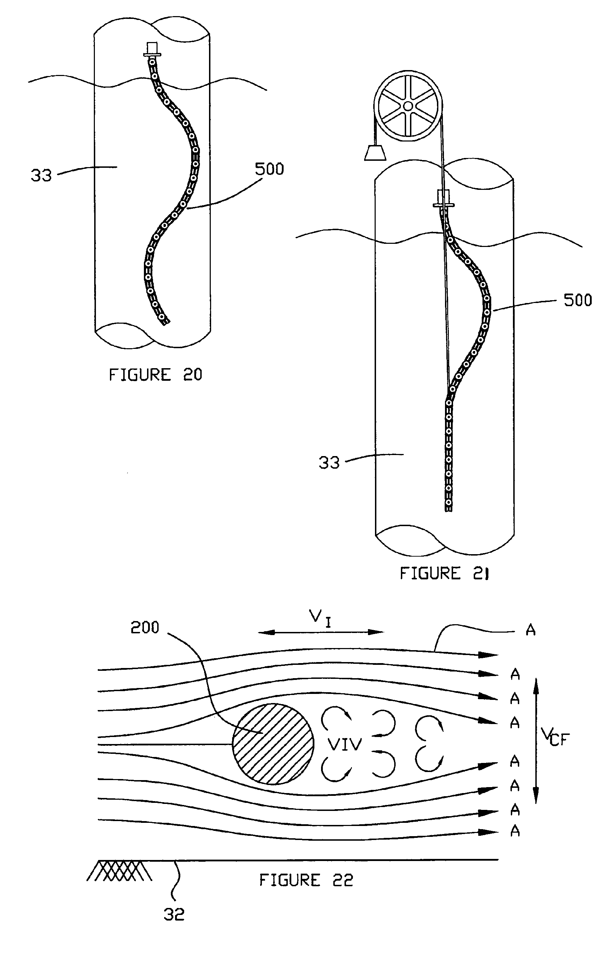

The cable protector (500) assists in protecting against damage from cable movement or cable vibration caused by currents and waves, water flow being indicated by the arrows A, reducing risk of cable failure either through abrasion of the cable at the contact points with the seabed/structure or by fatigue. This vibration, commonly referred to as Vortex Induced Vibration (referred to herein as VIV), as indicated by the tightly-curved arrows in Figure 22, is created as a result of the vortex shedding from the surface of the cable due to fluid flow past the cable. Even in steady flow conditions VIV can occur, as the vortex shedding leads to alternating pressure fields on the surface of the cable, and oscillating lift and drag forces. Where the frequency of vortex shedding approaches a structural frequency of the cable, synchronization takes place and the cable undergoes severe vortex induced vibration.

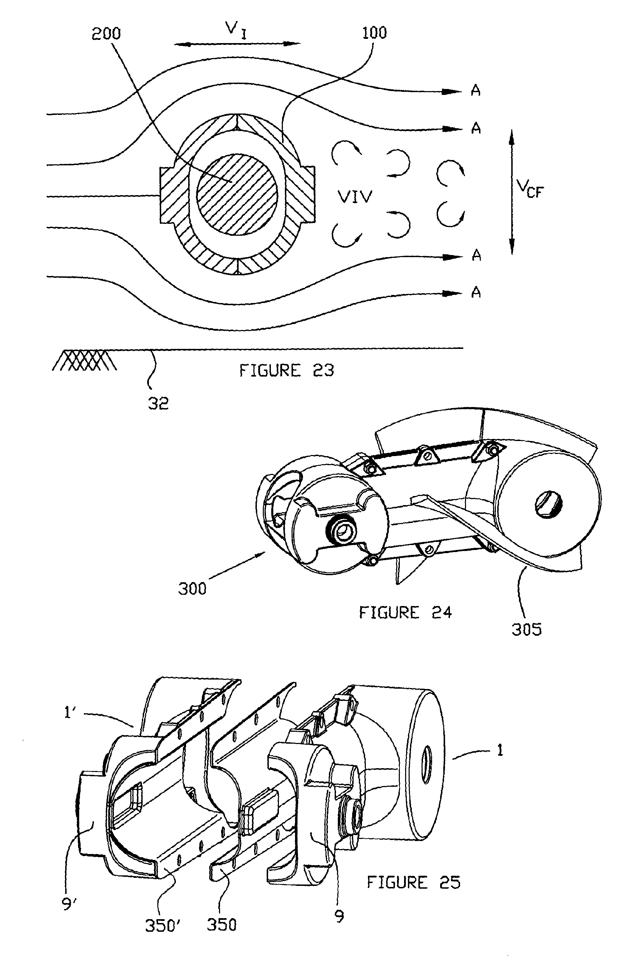

Cables close to the seabed being acted upon by water currents broadly parallel to the seabed can vibrate in both the 'in-line', (horizontal for a horizontal cable) direction, indicated by V_{I}, and in the 'cross-flow' (vertical direction for a horizontal cable), perpendicular to the in-line flow, indicated by V_{CF} in Figures 22 and 23.

Use of the cable protector (500) as shown in Figure 23 with damping devices prevents in-line movement and restricts and dampens cross flow movement. The cable protector response can be reduced for instance by the use of external and/ or internal devices such as dampers or by increasing the weight of the cable protectors. Hence the use of external devices assists in suppressing vibration and reducing the risk of vibration.

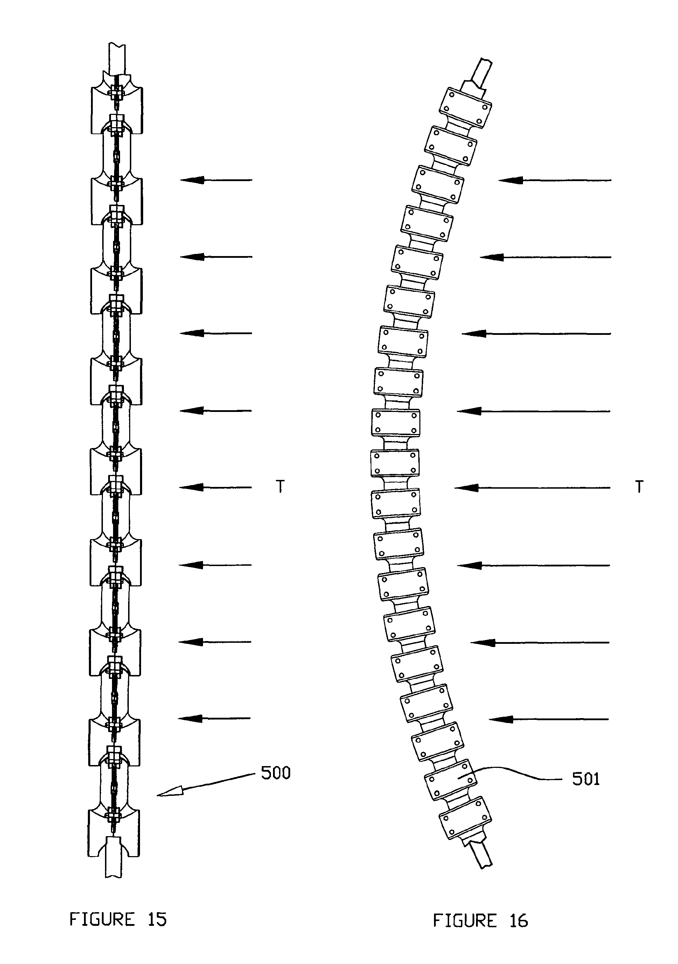

Figure 15 shows a side view of Figure 12. In this case the cable protector is designed to minimise movement in the secondary planes and to preventing movement in the horizontal plane, allowing movement about the z axis only. For comparison, Figure 16 shows a similar view to Figure 15, except that the cable protector (501) is a conventional bend limiting device, in which angular movement is allowed about the y and x axes and consequent gross movement, swaying or vibration may eventually lead to cable failure.

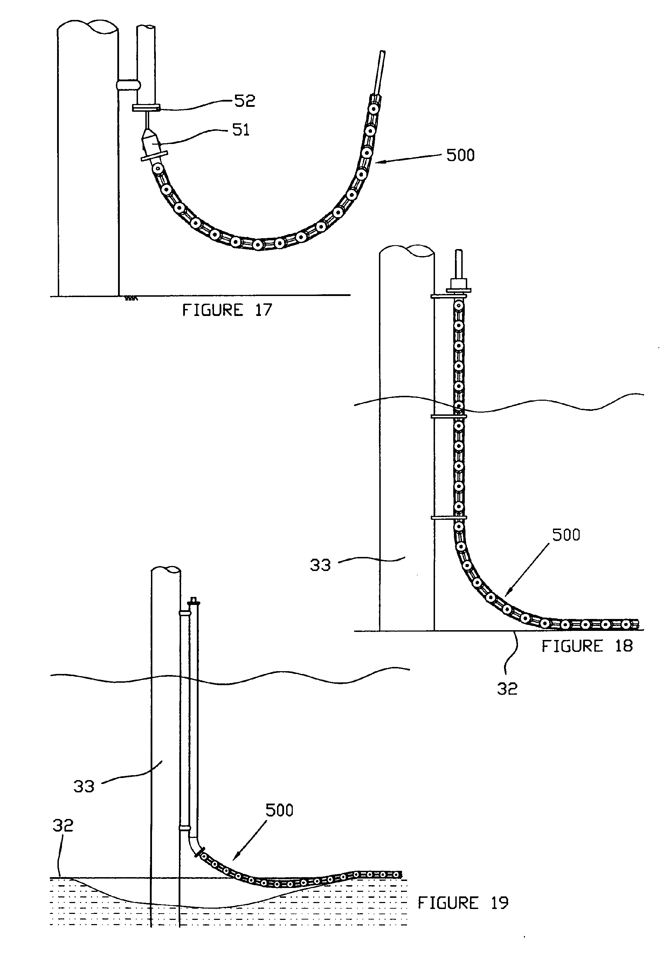

Figure 17 shows a cable protector according to the invention (500) being deployed as a bend limiter with a latching head (51) ready to engage with a latching ring (52).

Figure 18 shows an offshore structure and a J tube made up entirely of modules according to the invention, the upper modules of which are locked out at the neutral central position for instance by the use of adjuster bolts (310) and the lower ones may be locked out again by adjuster bolts (310) at an extreme angle to provide a fixed J angle; alternatively the modules can be allowed to float to find their own position. A feature of this configuration is that the entire J-tube assembly can be pre-installed on the cable, and then deployed together with the cable and attached to the structure. Furthermore, the pre-installed modules may be wound onto the cable deployment drum, with no pre-set locking out, and then deployed. Once in the required position adjuster bolts or similar may be fitted and adjusted to fix the angles between modules to give the overall configuration as required. These features may be particularly useful in retrofitting an additional cable onto an offshore structure.

Figure 19 demonstrates an embodiment employed to support cable where scour occurs around a support structure, as referred to earlier. Here the seabed level has retreated from the original level, and consequently the cable is in suspension over a significant length if there is no slack available in the cable length. Unprotected cable would be vulnerable to damage by external aggression or from movement or vibration.

Figure 20 shows use of the cable protector as a bend limiter (500) according to the invention, with a 'snaked' portion to provide some slack storage. The sections are locked out at maximum angle within the snake portion. If the situation as seen in Figure 19 arises, the locks can be removed, taking out the snake and thus releasing additional cable length to reduce the suspension. Cable slack may also be stored on the seabed by using a snaked cable protector bend limiter placed horizontally on the seabed rather than vertically the structure. A potential advantage of a snaked cable on the seabed fitted in such a cable protector is that it will be constrained from rolling along the seabed under the influence of currents.

By removing the lock out adjusters (310 or 312) or removing the cable protector itself, excess length ('slack') in the cable can be generated to relieve excess cable tension.

This can be used for cable which may have significant thermal expansion (on heating) and contraction (on cooling), for instance an oil production flexible flowline; such a flexible snake section can also be used to maintain cable tension (or compression) within allowable limits.

Figure 21 shows a dynamic version of Figure 20 in which a counterbalance weight is used on the snaked portion. Any increase in tension in the cable due to the counterbalance will cause the assembly to elongate, reducing the snake angle, and hence freeing cable to reduce the tension, and minimise cable suspensions. A tension spring or sprung hydraulic cylinder could be used to fulfil a similar function to the counterbalance weight.

Figure 24 shows a modified module (300) according to the invention having external strakes (305) running helically along the outside of the module to reduce vortex induced vibration (VIV).

The modules of the cable protector are made from a rigid or generally rigid material. The choice of material for the modules of the cable protector will depend on factors such as required weight for the application, maximum cable, wave and current forces to be resisted, optimum configurations to minimise vibration, maximum impact resistance required, corrosion requirements, and manufacturing, transport and installation costs. Hence the materials may range from cast ductile iron, steel or aluminium, to reinforced concrete (steel or fibre) or fabricated or forged from steel or aluminium, or a combination of these, or alternatively be made as a moulded or cast polymer, for instance in polyurethane or nylon, or moulded in fibreglass or other composite material, or it may for instance be of recycled rubber. For sleeves made pre-dominantly from polymers, different insert materials, typically metals such as stainless steel may be used around the pivot area and articulation adjustment areas to provide suitable additional local strength and corrosion protection.

As illustrated in Figure 25 the cable protector bend limiter may also incorporate a pair of low friction liners (350), one shown fitted in the left hand half module and the other one shown ready to be fitted into the right hand half module. Such low friction liners would typically be made of a material such as polyethylene to enable the cable to be pulled through the cable protector at lowest possible tension, and to enable the cable to rotate as easily as possible within the cable protector. An alternative to fitting a discrete liner is to apply a low friction coating to the cable protector surfaces, such as nylon or a fluoropolymer ('Teflon').

Cable clamps internally to the cable protector may also be fitted to enable the cable to be gripped and located centrally within the cable protector.

The cable protector may incorporate holes or slots to encourage sediments to be captured within the sleeve to make the assembly more rigid during service and increase cable impact protection. Alternatively the cable protector may be perforated to reduce weight. Additionally, the choice of materials may be such as to encourage some level of corrosion to inhibit free articulation once in service. The cable protector may also be fitted with additional mounting holes or recesses, including a central pair of holes (47) shown in Figure 3, to facilitate handling or the fitting of buoyancy.

Protective sleeves according to the invention may be applied to the cable on the deck of the lay ship during installation, or may be applied by divers on an in situ cable or may be factory fitted where the cable is supplied on a reel with the cable already installed within the sleeve.

One application for in situ fitting by divers is illustrated by Figure 19. If the cable has been scoured around, or laid with too much tension, a suspension of cable is caused. If vibration of that suspension is a concern then protective sleeve according to the invention can be fitted by divers and locked into position as shown in Figures 7 to 9, hence preventing further vibration.

Typically, cable protectors according to the invention may be employed to house various types and dimensions of cable, for example from 10mm diameter telecommunications cable, 200mm power cable and 300mm flexible flowline.

Finally, the present invention may be embodied in other specific forms, for example having different dimensions, without departing from the spirit or essential characteristics thereof. Therefore, the presently discussed embodiments are considered to be illustrative and not restrictive, the scope of the invention being indicated by the following claims.

## Claims

1. An underwater cable protector (500), comprising at least two adjacent modules (100) forming a housing with a through passage (220) for cable (200), each module having a male co-operative end (30) and a female opposite co-operative end (40), the adjacent modules being interconnected by an articulation joint comprising the male co-operative end (30) of one module and the female co-operative end (40) of the adjacent module, which receives the male co-operative end (30), wherein the male and female co-operative ends (30, 40) are relatively angularly movable, **characterised in that**
the articulation joint comprises an axial arrangement comprising a male axle device (30 ; 60) confined in a female axle support (40 ; 65) to provide relative angular movement solely about a transverse axis (Z) through the articulation joint, wherein this transverse axis is perpendicular to the longitudinal axis (X) of the through passage (220) in the joint.

2. An underwater cable protector according to claim 1, wherein the male axle device is provided by the male co-operative end (30) and the female axle support is provided by the female co-operative end (40).

3. An underwater cable protector according to claim 1 or 2, wherein the axial arrangement comprises at least one male axle device (60, 60') at the side of one of the co-operative ends (30, 40) of the adjacent modules and at least one female axle support (65, 65') at the co-operative side of the other of the co-operative ends (40, 30), receiving the or the respective male axle device (60, 60').

4. An underwater cable protector according to claim 1, 2 or 3, comprising at least one additional device (10, 24, 26, 310, 324) to control relative angular movement of the male and female co-operative ends (30, 40) of the articulation joint.

5. An underwater cable protector according to claim 4, wherein the additional device comprises at least one device (10, 24, 26) to limit the amount of relative angular movement of the male and female co-operative ends (30, 40) of the articulation joint.

6. An underwater cable protector according to claim 4 or 5, wherein the additional device comprises at least one device (310, 312) to fix a selected angle of orientation between the male and female co-operative ends (30, 40) of the articulation joint.

7. An assembly of an underwater cable protector according to any one of claims 1 to 6, attached to a guide tube (34) of a structure supported underwater.

8. An assembly of an underwater cable protector according to any one of claims 3 to 6, wherein the at least one male axle device (60), or at least one female axle support(65), on the end module (1000) at a free end of the cable protector also acts as an attachment device for a pulling-in device.

9. A method of articulation of an underwater cable protector having at least two adjacent modules (100) forming a housing with a through passage (220) for cable (200), each module having a male co-operative end (30) and a female opposite co-operative end (40), the adjacent modules being interconnected by an articulation joint comprising the male co-operative end (30) of one module and the female co-operative end (40) of the adjacent module, which receives the co-operative male end,
the method comprising angularly moving the adjacent modules (100) relatively to one another,
**characterised by** relatively angularly moving the modules (100) solely about a transverse axis (Z) through the articulation joint, wherein this transverse axis (Z) is perpendicular to the longitudinal axis (X) of the through passage in the joint.

10. A method according to claim 9, comprising controlling relative angular movement of the male and female co-operative ends (30, 40) of the articulation joint.

11. A method according to claim 10, further comprising limiting the amount of relative angular movement of the male and female co-operative ends (30, 40) of the articulation joint.

12. A method according to claim 10 or 11, comprising fixing a selected angle of orientation between the male and female co-operative ends (30, 40) of the articulation joint.

13. Use of an underwater cable protector (500) according to any one of claims 1 to 8, to protect cable (200) housed in the through passage (220), wherein the protector is deployed so that adjacent modules (100) angularly move relatively to one another, **characterised by**
relatively angularly moving the modules (100) solely about a transverse axis (Z) through the articulation joint, wherein this transverse axis (Z) is perpendicular to the longitudinal axis (X) of the through passage in the joint,
whereby the cable protector articulates about the or each articulation joint and adopts a route according to its surroundings, protecting the cable housed in the through passage.

14. Use of a cable protector according to claim 13, wherein the cable is suspended from a guide tube of a structure supported underwater.

15. Use of a cable protector according to claim 14, when dependent on claim 3, wherein the end module (1000) at a free end of the cable protector is pulled into the guide tube (34) by a pulling device attached to the or each male axle device (60, 60') or female axle support (65, 65')on the end module.
